# EUROPÄISCHE PATENTSCHRIFT

(11) **EP 2 498 017 B1**
(45) Veröffentlichungstag und Bekanntmachung des Hinweises auf die Patenterteilung: **14.04.2021**
(21) Anmeldenummer: 12000768.7
(22) Anmeldetag: 07.02.2012
(51) Int. Cl.: F24F 13/12, F24F 1/01

(54) **Verfahren zum Belüften, Heizen und/oder Kühlen eines Raumes sowie entsprechende Vorrichtung**
Method for ventilating, heating and/or cooling a room and device for same
Procédé destiné à l'aération, au chauffage et/ou au refroidissement d'une pièce ainsi que dispositif correspondant

(30) Priorität: 11.03.2011 DE 102011014393
(43) Veröffentlichungstag der Anmeldung: 12.09.2012
(73) Patentinhaber: LTG Aktiengesellschaft, 70435 Stuttgart (DE)
(72) Erfinder: Roth, Hans-Werner, 71732 Tamm (DE); Wagner, Ralf, 70771 Leinfelden-Echterdingen (DE)
(74) Vertreter: Clarenbach, Carl-Philipp

(56) Entgegenhaltungen:
- EP-A2- 1 130 331
- DE-A1- 3 644 567
- FR-A- 1 476 716
- US-A- 2 442 963
- US-A- 3 100 078

## Beschreibung

Die Erfindung betrifft ein Verfahren zum Belüften, Heizen und/oder Kühlen eines Raumes eines Gebäudes oder dergleichen.

Aus dem Stand der Technik sind verschiedene Verfahren zum Belüften, Heizen und/oder Kühlen eines Raumes eines Gebäudes bekannt. Bei der so genannten tangentialen Mischlüftung wird Luft, insbesondere konditionierte, also erwärmte oder gekühlte Luft, vorzugsweise im Bereich einer Fassade des Raumes nach oben ausgeblasen, wodurch die Luft entlang der Raumbegrenzungsflächen, also zunächst entlang einer Wand oder eines Fensters und dann entlang der Decke des Raumes strömt und dabei durch Induktionswirkung Raumluft mitreißt, sodass es zur Mischlüftung kommt. Insgesamt bildet sich eine Raumwalze aus, das heißt, die entlang der Decke strömende Luft strömt an einer Begrenzungswand nach unten und dann über den Fußboden zurück in Richtung Fassade. Nach einem anderen Verfahren ist eine so genannte Quelllüftung eines Raumes bekannt, bei der - vorzugsweise ausgehend von der Fassade des Raumes - Luft mit einem sehr geringen Impuls im Fußbodenbereich ausströmt, in die Aufenthaltszone des Raumes gelangt, an einer gegenüberliegenden Raumwandung um 180° umgelenkt wird und in Richtung Fassade zurückströmt. Bei einer bekannten Misch-Quelllüftung ist vorgesehen, dass im Bereich der Fassade Luft mit nicht allzu starkem Impuls ausströmt, sodass zunächst durch Induktionswirkung Raumluft eingemischt wird, dann jedoch die Luft derart verlangsamt ist, dass sie zum Fußboden des Raumes absinkt und dort im Bodenbereich als Quellluft bis zur Aufenthaltszone des Raumes gelangt, an einer gegenüberliegenden Raumwand aufsteigt und im Bereich einer oberen Zone des Raumes in Richtung Fassade zurückströmt. Schließlich ist es auch bekannt, eine Kombination der erwähnten Misch-Quelllüftung mit einer Quelllüftung durchzuführen.

Bei den vorstehend erwähnten, bekannten Verfahren werden oftmals Induktionseinrichtungen eingesetzt, die mit Primärluft betrieben werden, wobei durch die Induktionswirkung der jeweiligen Induktionseinrichtung Sekundärluft, also Raumluft angesaugt wird und dabei einen Wärmetauscher passiert. Die vom Wärmetauscher kommende, konditionierte Luft trifft dann mit der Primärluft zusammen, wobei die so gebildete Zuluft als Mischluft, bestehend aus Primärluft (Frischluft) und Sekundärluft (Raumluft) in den Raum eingebracht wird. Durch die Induktionswirkung der Induktionseinrichtung kann es in bestimmten Betriebsarten, insbesondere bei einem großen Volumenstrom der Primärluft, zu sehr großen Luftbewegungen im Raum kommen, da beispielsweise ein Anteil Primärluft - aufgrund der Induktionswirkung der Induktionseinrichtung - zu insgesamt vier Anteilen Mischluft führt. Liegt also eine Betriebsart mit einem hohen Primärluftstrom vor, beispielsweise weil sich im Raum eine größere Anzahl von Personen befindet, so kann die resultierende, starke Luftbewegung in der Aufenthaltszone des Raumes zu einer als unangenehm empfundenen Belüftungs-, Heiz- und/oder Kühlsituation führen.

Aus der Offenlegungsschrift EP 1 130 331 A2 ist ein Verfahren und eine Vorrichtung zur Belüftung und Temperierung eines Raums bekannt, bei welchem durch Primärluft ein Sekundärluftstrom durch einen Wärmetauscher erzeugt und als Mischluft zur Fassadenabschirmung in den Raum geleitet wird, und bei welchem zusätzlich ein Primärluftstrom zur Erzeugung einer Raumwalze in den Raum gefördert wird.

Der Erfindung liegt die Aufgabe zugrunde, ein Verfahren der eingangs genannten Art anzugeben, bei dem stets eine hinreichend geringe Luftbewegung im Raum vorliegt, sodass in der Aufenthaltszone stets ein angenehmes Klima herrscht.

Die der Aufgabe zugrundeliegende Erfindung wird durch ein Verfahren mit den Merkmalen des Anspruchs 1 gelöst. Dabei wird -je nach Betriebsart - eine Volumenstromstelleinrichtung, eine Induktionseinrichtung und/oder ein Wärmetauscher eingesetzt, wobei durch die Wirkung der Induktionseinrichtung erste Sekundärluft den Wärmetauscher passiert und zusammen mit erster, der Induktionseinrichtung zugeführter Primärluft in einer ersten Raumströmungsart in den Raum eingebracht wird, wobei zweite Primärluft in einer von der ersten Raumströmungsart unterschiedlichen zweiten Raumströmungsart in den Raum eingebracht wird, und wobei die Volumenstromstelleinrichtung die Volumenströme der ersten und zweiten Primärluft in Abhängigkeit von einer stofflichen und/oder einer thermischen Raumlast des Raumes steuert und/oder regelt. Mithin sind erfindungsgemäß zwei unterschiedliche Raumströmungsarten der in den Raum eingebrachten Luftströme vorgesehen, wobei diese Raumströmungsarten nicht gleich, sondern unterschiedlich sind. Die Luft der ersten Raumströmungsart wird von der Induktionseinrichtung geliefert, die mit der ersten Primärluft versorgt wird. Der zweiten Raumströmungsart liegt zweite Primärluft zugrunde, die jedoch nicht über eine Induktionseinrichtung oder über eine Induktionseinrichtung mit geringerer Induktion gegenüber der Induktionseinrichtung für die erste Primärluft in den Raum eingebracht wird. Die Benennung der Primärluft mit erster Primärluft und zweiter Primärluft erfolgt nur deshalb, um eine Unterscheidung möglich zu machen, denn vorzugsweise entstammt die erste Primärluft derselben Quelle wie die zweite Primärluft, beispielsweise einer im Gebäude befindlichen Luftzentrale, von der aus der Raum versorgt wird, wobei sich in dem Raum mindestens ein lufttechnisches Gerät befindet, dass das erwähnte Verfahren realisiert. Erfindungsgemäß ist die Volumenstromstelleinrichtung vorgesehen, die die Volumenströme mit der ersten und zweiten Primärluft in Abhängigkeit von der stofflichen und/oder der thermischen Raumlast des Raumes steuert und/oder regelt. Unter "stofflicher Raumlast" ist der Außenluftstrom - Frischluft - zu verstehen, der erforderlich ist, um eine vorgegebene Raumluftqualität einzuhalten. Die thermische Raumlast entspricht einer Heiz- und Kühlleistung, die erforderlich ist, um eine Soll-Raumtemperatur zu erreichen. Mittels der Volumenstromstelleinrichtung ist es möglich (zum Beispiel bei einer großen Personenzahl im Raum), den der Induktionseinrichtung zugeführten Primärluftvolumenstrom und damit den Volumenstrom der ersten Sekundärluft, derart einzustellen, dass die durch die Induktionswirkung einhergehende Luftbewegung im Raum nicht zu stark wird, dass es zu Zugerscheinungen in der Aufenthaltszone kommt, wobei durch den entsprechend von der Volumenstromstellrichtung eingestellten Volumenstrom der zweiten Primärluft, also durch die zweite Primärluft, sichergestellt werden kann, dass die Luftwechselzahl des Raumes ausreichend, und damit die Raumluftqualität hinreichend gut ist, dass es bei einer nur niedrigen stofflichen Raumlast bleibt, also nicht das Gefühl nach "verbrauchter Luft" im Raum entsteht. Da die zweite Primärluft ohne Induktionseinrichtung oder über eine Induktionseinrichtung mit geringerer Induktion gegenüber der Induktionseinrichtung für die erste Primärluft in den Raum eingebracht wird, treten bei ihr die entsprechenden Vervielfältigungswirkungen, die eine Induktionseinrichtung mit sich bringt, nicht auf beziehungsweise nur in geringerem Maße auf, sodass trotz großem Volumenstroms der zweiten Primärluft keine Zugerscheinungen im Raum auftreten. Da sich die Raumströmungsarten der von der Induktionseinrichtung stammenden Mischluft und der zweiten Primärluft unterscheiden und derart gewählt werden können, dass in der Aufenthaltszone eine thermische Behaglichkeit bei guter Luftqualität vorliegt und insgesamt keine zu große Raumluftbewegung erfolgt, ist ein optimales Lüften beziehungsweise Klimatisieren des Raumes gewährleistet.

Nach einer Weiterbildung der Erfindung ist vorgesehen, dass die Induktionseinrichtung mindestens eine Induktionsdüse für die erste Primärluft aufweist. Durchströmt die erste Primärluft die Induktionsdüse, so wird durch Induktionswirkung die erste Sekundärluft angesaugt, die dabei den Wärmetauscher passiert und dadurch konditioniert, beispielsweise erwärmt oder gekühlt werden kann. Der Wärmetauscher wird bevorzugt mit Warmwasser beziehungsweise Kaltwasser betrieben.

Um das erfindungsgemäße Verfahren durchzuführen, ist eine Vorrichtung mit den Merkmalen des Anspruchs 14, insbesondere ein im Raum aufzustellendes Gerät, vorzugsweise ein Deckengerät oder ein Fassadengerät oder ein Bodengerät vorgesehen. In Abhängigkeit von der Größe des Raumes können in ihm mehrere derartige lufttechnische Geräte aufgestellt sein. Diese Geräte dienen der Belüftung (ohne Betrieb des Wärmetauschers), dem Heizen oder Kühlen des Raumes (mit entsprechendem Betrieb des Wärmetauschers) und können vorzugsweise zusätzlich auch eine Luftbefeuchtung oder -entfeuchtung bei Bedarf vornehmen.

Nach einer Weiterbildung der Erfindung ist es vorteilhaft, wenn die Volumenstromstelleinrichtung den Volumenstrom der ersten Primärluft stromabseitig der Induktionsdüse steuert und/oder regelt, insbesondere direkt am Austrittsende der Induktionsdüse steuert und/oder regelt. Die Volumenstromstelleinrichtung weist mindestens ein Stellglied auf, das eine Durchtrittsöffnung für den Volumenstrom der ersten Primärluft hinsichtlich ihres Querschnittes einstellt. Der Querschnitt kann ganz geschlossen oder ganz geöffnet sein oder auch jede beliebige Zwischenstellung einnehmen, je nachdem, wie ein das Stellglied antreibender Antrieb der Volumenstromstelleinrichtung angesteuert wird. Die Ansteuerung erfolgt gesteuert oder geregelt, also ist eine Steuer- oder Regelvorrichtung vorhanden, die in Abhängigkeit mindestens eines Parameters, der vorzugsweise mittels eines im Raum befindlichen Sensors aufgenommen wird, erfasst und/oder er kann auch manuell beeinflusst beziehungsweise vorgegeben werden. Der Volumenstrom der ersten Primärluft wird stromabseitig der Induktionsdüse mittels des Stellglieds eingestellt, wobei dies bevorzugt direkt am Austrittsende der Induktionsdüse erfolgt, insbesondere derart, dass die Primärluft die Düse verlässt und dann in die direkt angrenzende Volumenstromstelleinrichtung eintritt. Die Anordnung ist dabei vorzugsweise derart getroffen, dass das Stellglied mit der Austrittsöffnung der Induktionsdüse zusammenwirkt, vorzugsweise derart, dass das Stellglied mit einer Steuerkante die Austrittsdüse mehr oder weniger weit abdeckt beziehungsweise öffnet. Die Steuerkante des Stellglieds kann eine Randkante des Stellglieds sein oder eine Steueröffnung, also ein Durchbruch. Das Stellglied ist vorzugsweise als Steuerschieber ausgebildet, der von dem Antrieb quer zur Ausströmrichtung der Induktionsdüse verlagerbar ist. Insbesondere ist eine Vielzahl von Induktionsdüsen vorgesehen, die mit dem Stellglied zusammenarbeiten. Der Volumenstrom der ersten Primärluft verteilt sich dann über die Anzahl der Induktionsdüsen.

Nach einer Weiterbildung der Erfindung ist vorgesehen, dass die zweite Primärluft vor dem Einbringen in den Raum mindestens eine Ausströmdüse passiert und dass die Volumenstromstelleinrichtung den Volumenstrom der zweiten Primärluft stromabseitig der Ausströmdüse steuert und/oder regelt, insbesondere direkt am Austrittsende der Ausströmdüse steuert und/oder regelt. Die Anordnung ist vorzugsweise derart getroffen, dass ein und dieselbe Volumenstromstelleinrichtung sowohl den Volumenstrom der ersten Primärluft als auch den Volumenstrom der zweiten Primärluft steuert und/oder regelt. In einem solchen Falle ist auch nur ein Stellglied und ein Antrieb vorhanden. Durch eine entsprechende Anordnung der Steuerkanten beziehungsweise Steueröffnungen des Stellglieds wird - stellungsabhängig von diesem - der Volumenstrom der ersten Primärluft und der Volumenstrom der zweiten Primärluft bedarfsgerecht eingestellt. Dabei ist dafür Sorge getragen, dass keine Durchmischung der ersten Primärluft mit der zweiten Primärluft erfolgt, das heißt, diese beiden Primärluft-Volumenströme sind ab der Induktionsdüse beziehungsweise Ausströmdüse lufttechnisch voneinander getrennt. Die Ausströmdüse bewirkt nicht - so wie die Induktionsdüse - ein Ansaugen von Sekundärluft, sondern die zweite Primärluft wird - ohne dass sich eine weitere Luftart einmischt - in den Raum des Gebäudes eingebracht. Insofern ist es nicht unbedingt erforderlich, dass die Ausströmdüse eine tatsächliche Düsenfunktion ausübt, sondern sie kann beispielsweise auch ohne eine Querschnittsverengung, also mit gleichbleibendem Durchströmungsquerschnitt ausgestattet sein. Dennoch wird sie im Zuge dieser Anmeldung als "Düse" bezeichnet.

Eine Weiterbildung der Erfindung sieht vor, dass die Auslassdüse der zweiten Primärluft genauso oder ähnlich der Induktionsdüse der ersten Primärluft ausgebildet ist. Diese Auslassdüse induziert mittels der zweiten Primärluft einen geringen Anteil von Sekundärluft; die unbehandelte Raumluft ist. Zweite Primärluft und zweite Sekundärluft werden gemischt und treten als Quellluft in den Raum ein. Die Auslassdüse ist genauso wie die Induktionsdüse ausgebildet oder zumindest ähnlich, so dass insbesondere dieselbe Form beziehungsweise derselbe Querschnitt vorliegt, aber nicht dieselbe Induktionswirkung. Bevorzugt weist die Auslassdüse eine geringere Induktionswirkung auf als die Induktionsdüse.

Eine Weiterbildung der Erfindung sieht vor, dass die Volumenstromstelleinrichtung mindestens einen, vorzugsweise nur einen oder zwei gegenläufige, insbesondere mit oder je mit mindestens einer Steueröffnung versehenen/versehene Steuerschieber aufweist, der/die mit dem Austrittsende der Induktionsdüse und/oder dem Austrittsende der Ausströmdüse zur Einstellung des Austrittsquerschnitts der Induktionsdüse und/oder der Ausströmdüse lufttechnisch zusammenwirkt/zusammenwirken. Der am Austrittsende der Induktionsdüse beziehungsweise Ausströmdüse entlanggleitende Steuerschieber kann mittels seiner Steueröffnung, die durch eine Schieberverlagerung mehr oder weniger den Strömungsweg freigibt beziehungsweise öffnet oder komplett schließt, den Volumenstrom einstellen. Sind zwei Steuerschieber vorgesehen, so sind diese aufeinander gleitend gelagert, wobei sie sich gegenläufig bewegen und jeweils mindestens eine Steueröffnung aufweisen. Der stromaufseitige Steuerschieber wirkt dann unmittelbar mit dem Austrittsende der Induktionsdüse beziehungsweise Ausströmdüse zusammen. Gegenläufige Steuerschieber haben den Vorteil, dass die von den Steueröffnungen gebildete Durchströmöffnung stets zentral zur Austrittsöffnung der Induktionsdüse beziehungsweise Ausströmdüse angeordnet ist, sofern dies gewünscht ist.

Die vorstehend erwähnte Volumenstromstelleinrichtung, die direkt am Austrittsende der Induktionsdüse beziehungsweise Ausströmdüse die Querschnittseinstellung vornimmt, hat den besonderen Vorteil, dass sehr gute akustische Werte erzielt werden, das heißt im Betrieb treten keine störenden Luftströmungsgeräusche, Pfeifgeräusche und so weiter auf.

Ferner ist es erfindungsgemäß vorgesehen, dass die erste Raumströmungsart eine Misch-Quelllüftung ist. Hierunter ist eine Strömung der in den Raum eintretenden Mischluft zu verstehen, die einen nicht allzu großen Impuls aufweist, sodass zwar zunächst durch Einblasen der Mischluft Raumluft induziert wird, das heißt, sie mischt sich in den mindestens einen eingeblasenen Luftstrahl ein, wobei jedoch der Impuls nicht ausreicht, um die Mischluft allzu weit in den Raum, zum Beispiel bis zur Decke des Raumes, zu blasen, sofern sie in Richtung der Decke des Raumes eingeblasen wird. Durch den nicht zu großen Impuls erfolgt eine derartige Geschwindigkeitsverringerung, dass die Mischluft bogenförmig in Richtung des Fußbodens des Raumes strömt und dabei in eine Quelllüftung übergeht und in die Aufenthaltszone des Raumes gelangt.

Ferner ist erfindungsgemäß vorgesehen, dass die zweite Raumströmungsart eine Quelllüftung ist. Die zweite Primärluft wird dazu vorzugsweise etwa horizontal in den Raum eingebracht, insbesondere in einer Fußbodenzone des Raumes. Das Einbringen erfolgt derart impulsarm, dass die erwähnte Quelllüftung erfolgt.

Die Anordnung ist vorzugsweise derart getroffen, dass sich die Luft der Misch-Quelllüftung mit der Quelllüftung in der Aufenthaltszone des Raumes vereinigt, das heißt, die Misch-Quelllüftung hat sich in dieser Aufenthaltszone zur Quelllüftung abgebaut und trifft auf die Quellluft, die von der zweiten Primärluft bewirkt ist, sodass in der Aufenthaltszone lediglich eine Quelllüftung vorliegt. In einer vorgelagerten Zone der Misch-Quelllüftung ist eine intensive Mischung der Mischluft mit der Raumluft erfolgt, wodurch insbesondere thermische Raumlasten abgetragen werden können (Kühlfall) oder eine entsprechende Erwärmung stattfindet (Heizfall). Wird weder ein Kühlen oder Heizen vorgenommen, so ergibt sich ein gutes Lüftungsergebnis.

Nach einer Weiterbildung der Erfindung ist vorgesehen, dass die erste Sekundärluft mit der ersten Primärluft die Mischluft bildet, die als Einzelstrahlen in den Raum eingebracht wird. Die Einzelstrahlen haben den Vorteil einer sehr großen Induktion mit der Raumluft, also der im Raum befindlichen Sekundärluft, die im Zuge dieser Anmeldung - zur Unterscheidung von der ersten Sekundärluft - als zweite Sekundärluft bezeichnet werden soll. Natürlich handelt es sich bei der ersten Sekundärluft auch um Raumluft.

Wie bereits erläutert, wird die Mischluft senkrecht nach oben oder schräg nach oben, insbesondere im Bereich einer Fassade des Raumes und/oder im Bereich eines Fensters des Raumes ausgeblasen. Ferner ist - wie erwähnt - insbesondere vorgesehen, dass die Quellluft der Quelllüftung horizontal oder etwa horizontal in den Raum eingeblasen wird.

Die Volumenstromstelleinrichtung wird insbesondere derart betrieben, dass der Anteil des Volumenstroms der ersten Primärluft am Volumenstrom der Gesamtluft 0 bis 40 % beträgt, wobei sich in einer Normal-Betriebsart der Volumenstrom der Gesamtluft aus der Summe der Volumenströme der ersten und zweiten Primärluft zusammensetzt und maximal 100 % betragen kann. Ferner ist es vorteilhaft, wenn aufgrund eines entsprechenden Betriebes der Volumenstromstelleinrichtung der Anteil des Volumenstroms der zweiten Primärluft am Volumenstrom der Gesamtluft 0 bis 60 % beträgt, wobei sich in einer Normal-Betriebsart der Volumenstrom der Gesamtluft aus der Summe der Volumenströme der ersten und zweiten Primärluft zusammensetzt und maximal 100 % betragen kann.

In einer Schnell-Betriebsart ist gegenüber der erwähnten Normal-Betriebsart vorgesehen, dass der Volumenstrom der Gesamtluft maximal 120 % beträgt, also 20 % mehr als in der Normal-Betriebsart. In einem solchen Falle ist vorgesehen, dass der Anteil des Volumenstroms der ersten Primärluft maximal 60 % und der Anteil des Volumenstroms der zweiten Primärluft maximal 60 % beträgt. Die Schnell-Betriebsart führt in sehr kurzer Zeit zu einem sehr guten Lüftungs-, Heiz- und/oder Kühlergebnis.

Insbesondere kann vorgesehen sein, dass als Primärluft von einer Klimazentrale des Gebäudes kommende, aufbereitete Außenluft und/oder von einem Fassadenlufteinlass des Gebäudes kommende, mittels einer Luftfördereinrichtung, insbesondere einem elektrischen Ventilator, geförderte Außenluft verwendet wird. Im ersten Fall (Klimazentrale) wird das erfindungsgemäße Verfahren also mittels eines zentralen lufttechnischen Geräts durchgeführt. Im zweiten Falle des Fassadenlufteinlasses mit Luftfördereinrichtung liegt ein dezentrales lufttechnisches Gerät vor.

Ferner ist vorgesehen, dass die erste Sekundärluft Raumluft, insbesondere im Bereich der Fassade des Raumes, vorzugsweise am geschlossenen Fenster des Raumes angesaugte Raumluft, ist. Diese wird bevorzugt derart angesaugt, dass sie von oben nach unten strömt und dabei die Fassade beziehungsweise das Fenster überstreicht, um dort eine lufttechnische Sperrschicht zu bilden, gegebenenfalls entfeuchtend auf die Fassade beziehungsweise auf das Fenster zu wirken und so weiter.

Die Erfindung betrifft ferner eine Vorrichtung zum Belüften, Heizen und/oder Kühlen eines Raumes eines Gebäudes oder dergleichen, wobei sie insbesondere zur Durchführung des vorstehend erwähnten Verfahrens dient, mit einer Volumenstromstelleinrichtung, einer Induktionseinrichtung und einem Wärmetauscher, wobei der Induktionseinrichtung erste Primärluft zuführbar ist und durch die Wirkung der Induktionseinrichtung erste Sekundärluft den Wärmetauscher passiert und zusammen mit der ersten Primärluft als Mischluft in einer ersten Raumströmungsart von mindestens einem ersten Luftauslass in den Raum einbringbar ist, wobei zweite Primärluft in einer zweiten Raumströmungsart von mindestens einem zweiten Luftauslass in den Raum einbringbar ist, und wobei die Volumenstromstelleinrichtung die Volumenströme der ersten und zweiten Primärluft in Abhängigkeit von der mittels mindestens eines Sensors ermittelten stofflichen und/oder thermischen Raumlast des Raumes steuert und/oder regelt.

Bevorzugt kann die Vorrichtung als zentrales oder dezentrales lufttechnisches Gerät ausgebildet sein, wobei auf die vorstehend erwähnten Definitionen von "zentral" und "dezentral" verwiesen wird.

Eine Weiterbildung der Erfindung sieht vor, dass die Vorrichtung bei der Ausbildung als dezentrales Gerät eine Luftfördereinrichtung, insbesondere einen elektrischen Ventilator, aufweist, der über einen Fassadenlufteinlass des Gebäudes Außenluft als Primärluft ansaugt. Diese Primärluft wird dann in die erste und in die zweite Primärluft aufgeteilt.

Wie erläutert, ist die erste Raumströmungsart eine Misch-Quelllüftung und die zweite Raumströmungsart eine Quelllüftung. Ferner ist bevorzugt bei der erfindungsgemäßen Vorrichtung vorgesehen, dass die Induktionseinrichtung mindestens eine Induktionsdüse aufweist und dass mindestens eine Ausströmdüse vorgesehen ist, die von der zweiten Primärluft vor dem Eindringen in den Raum durchströmt wird. Auf die vorstehenden Ausführungen wird hier ebenfalls verwiesen.

Eine Weiterbildung der erfindungsgemäßen Vorrichtung sieht vor, dass die Volumenstromstelleinrichtung mindestens einen, vorzugsweise nur einen oder zwei gegenläufige, insbesondere mit oder je mit mindestens einer Steueröffnung versehenen/versehene Steuerschieber aufweist, der/die mit dem Austrittsende der Induktionsdüse und/oder dem Austrittsende der Ausströmdüse zur Einstellung des Austrittsquerschnitts der Induktionsdüse und/oder der Ausströmdüse lufttechnisch zusammenwirkt/zusammenwirken.

Ferner ist bei der Vorrichtung vorzugsweise vorgesehen, dass die Luft der Misch-Quelllüftung mittels des ersten Luftauslasses nach oben oder schräg nach oben gerichteten, in den Raum strömt und dass die Luft der Quelllüftung mittels des zweiten Luftauslasses horizontal oder etwa horizontal gerichtet in den Raum strömt.

Schließlich betrifft die Erfindung einen Raum eines Gebäudes oder dergleichen, der mit der vorstehenden Vorrichtung ausgestattet ist.

Die Zeichnungen veranschaulichen die Erfindung anhand eines Ausführungsbeispiels, und zwar zeigt:
- Figur 1: eine lufttechnische Vorrichtung in Schnittdarstellung, die in einem Raum eines Gebäudes angeordnet ist,
- Figur 2: die Vorrichtung der Figur 1 in Detailansicht,
- Figur 3: eine weitere Detailansicht der Vorrichtung,
- Figur 4: die Vorrichtung der Figur 1 in einer gegenüber der Figur 1 anderen Betriebsart und
- Figur 5: eine perspektivische Ansicht auf die Vorrichtung im noch nicht eingebauten Zustand.

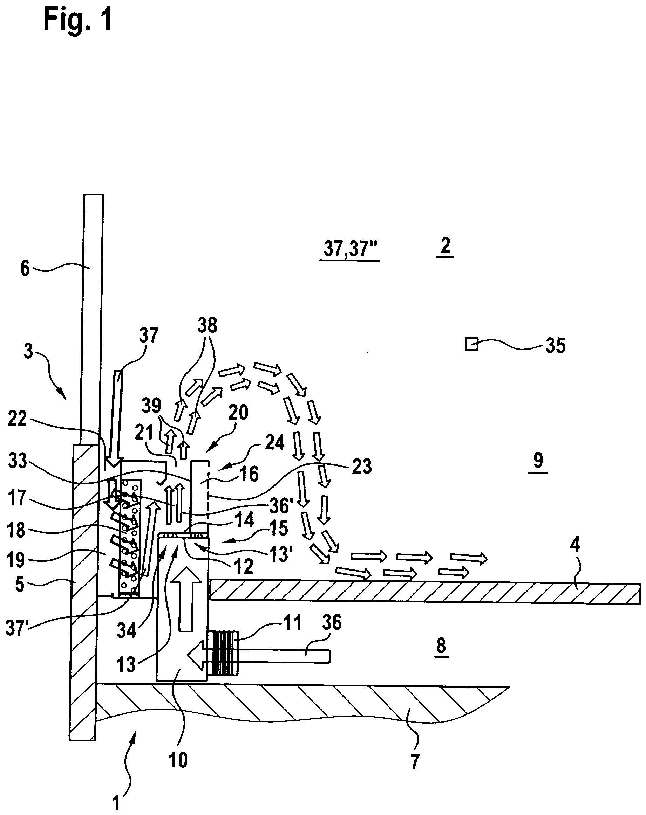

Die Figur 1 zeigt eine lufttechnische Vorrichtung 1, die in einem Raum 2 eines Gebäudes oder dergleichen angeordnet ist. Der Raum 2 weist eine Fassade 3 und einen aufgeständerten Fußboden 4 auf. Die Fassade 3 besitzt eine Brüstung 5 sowie ein Fenster 6. Unterhalb des aufgeständerten Fußbodens 4 befindet sich ein Rohfußboden 7. Zwischen Fußboden 4 und Rohfußboden 7 ist ein Unterflurbereich 8 ausgebildet.

Gemäß dem in den Figuren 1 bis 5 dargestellten Ausführungsbeispiel der erfindungsgemäßen Vorrichtung 1 ist diese als Brüstungsgerät ausgebildet. Alternativ ist es jedoch auch möglich, dass diese als Unterflurgerät oder als Deckengerät ausgebildet ist. Stets ist dabei dafür Sorge zu tragen, dass in einer Aufenthaltszone 9 des Raumes 2 entsprechende lufttechnische Ergebnisse vorliegen, so wie sie nachstehend zum Ausführungsbeispiel der Figuren 1 bis 5 beschrieben sind.

Gemäß Figur 1 weist die Vorrichtung 1 einen Luftverteilkasten 10 auf, der einen Primärluftanschluss 11 besitzt. Der Luftverteilkasten 10 ist an seiner Deckenwandung 12 mit vorzugsweise reihenartig angeordneten Induktionsdüsen 13 beziehungsweise Ausströmdüsen 13' versehen. Das Ausführungsbeispiel der Figur 1 zeigt vier Reihen derartiger Induktionsdüsen 13 beziehungsweise Ausströmdüsen 13'. Den Induktionsdüsen 13 und Ausströmdüsen 13' ist ein Steuerschieber 14 zugeordnet, mit dem eine Volumenstromeinstellung erfolgt, sodass die Induktionsdüsen 13 und die Ausströmdüsen 13' zusammen mit dem Steuerschieber 14 eine Volumenstromstelleinrichtung 15 bilden. Oberhalb des Steuerschiebers 14 ist auf der der Fassade 3 abgekehrten Seite eine Ausströmkammer 16 ausgebildet. Benachbart dazu liegt - oberhalb des Steuerschiebers 14 und auf der der Fassade 3 zugekehrten Seite - eine Mischkammer 17, an die ein Wärmetauscher 18 angrenzt, der zur Fassade 3 einen Zuströmfreiraum 19 belässt.

Die Anordnung ist derart getroffen, dass sich der Luftverteilkasten 10 zumindest bereichsweise im Unterflurbereich 8 befindet. Der Wärmetauscher 18 befindet sich mit seinem unteren Ende etwa auf dem Niveau des Fußbodens 4. Die Oberseite 20 der Vorrichtung 1 befindet sich etwa auf der Höhe des Übergangs der Brüstung 5 zum Fenster 6, das heißt, die Vorrichtung 1 ragt über den Fußboden 4 hinaus bis auf Höhe der Brüstung 5. An der Oberseite 20 ist ein erster Luftauslass 21 und auf etwa gleicher Höhe ein fassadenbenachbarter Lufteinlass 22 ausgebildet, der zum Zuströmfreiraum 19 führt. Der erste Lufteinlass 21 steht mit der Mischkammer 17 in Verbindung. Die Ausströmkammer 16 weist einen zweiten Luftauslass 23 auf, der in einer Bodenzone beziehungsweise Brüstungszone des Raumes 2 an einer Frontseite 24 der Vorrichtung 1 ausgebildet ist.

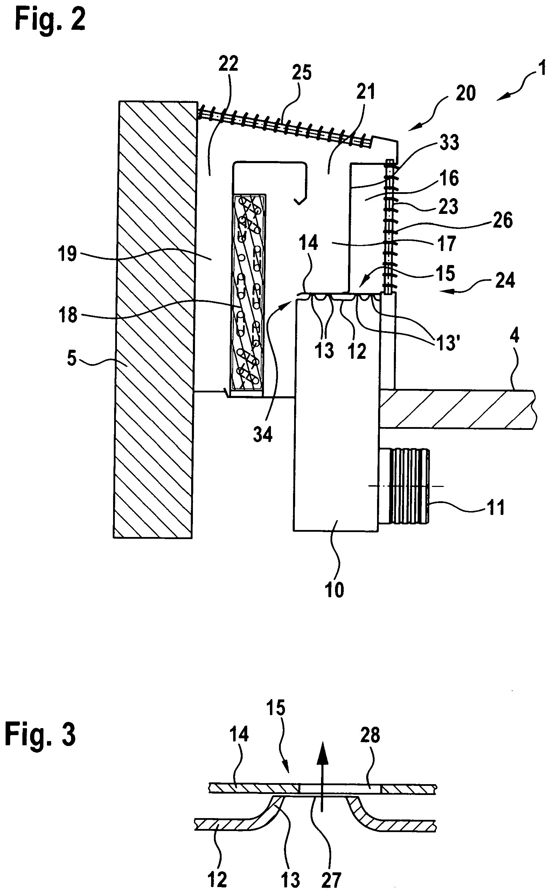

Der Figur 2 sind einige Details der Vorrichtung 1 entnehmbar. Insbesondere ist zu erkennen, dass der erste Luftauslass 21 und der Lufteinlass 22 von einem Luftleitgitter 25 abgedeckt sind. Ferner ist der zweite Luftauslass 23 mit einem Luftleitgitter 26 versehen. Der Luftverteilkasten 10 ist insbesondere quaderförmig ausgebildet, wobei - wie bereits erläutert - an seiner Deckenwandung 12 die Induktionsdüsen 13 und Ausströmdüsen 13' - vorzugsweise reihenförmig (die Reihen verlaufen in die Papierebene der Figur 2 hinein) ausgebildet sind.

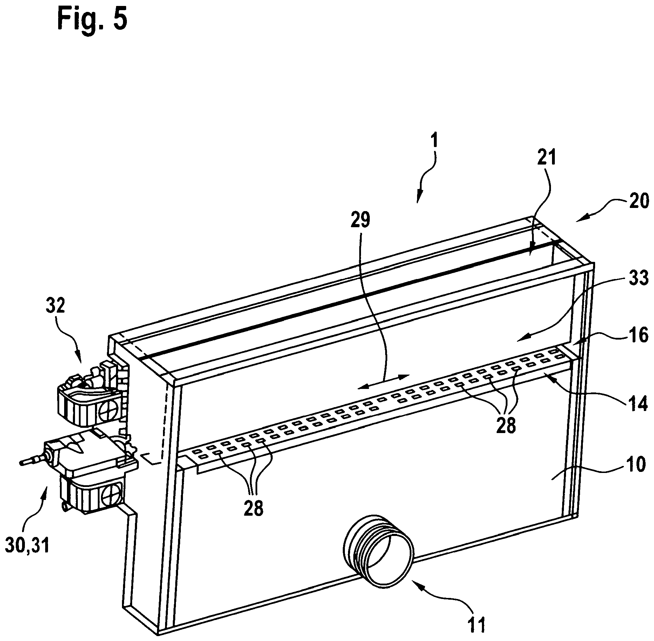

Die Figur 3 verdeutlicht eine derartige Induktionsdüse 13 beziehungsweise Ausströmdüse 13' in Schnittdarstellung. Es ist erkennbar, dass die jeweilige Induktionsdüse 13 beziehungsweise Ausströmdüse 13' einstückig mit der Deckenwandung 12 ausgebildet ist, vorzugsweise im Stanzprägeverfahren, wobei die Deckenwandung 12 insbesondere aus Metallblech besteht. Der Steuerschieber 14 wirkt unmittelbar mit dem Austrittsquerschnitt 27 der Induktionsdüse 13 beziehungsweise Ausströmdüse 13' zusammen, das heißt, er liegt vorzugsweise auf dem Austrittsquerschnitt 27 der Induktionsdüse 13 beziehungsweise Ausströmdüse 13' auf. Der Steuerschieber 14 lässt sich entlang einer durch Führungen vorgegebenen Richtung hin- und herbewegen, mit der Folge, dass den Steuerschieber 14 durchsetzende Steueröffnungen 28 mehr oder weniger in Überlappungsposition mit den jeweiligen Austrittsquerschnitten 27 der Induktionsdüsen 13 beziehungsweise Ausströmdüsen 13' gelangen, sodass es möglich ist - je nach Schiebestellung des Steuerschiebers 14 - die Induktionsdüsen 13 beziehungsweise Ausströmdüsen 13' zu verschließen, ganz zu öffnen oder beliebige Zwischenstellungen zu halten, mit der Folge, dass eine entsprechende Volumenstromeinstellung vorgenommen werden kann. Die Verschieberichtung des Steuerschiebers 14 ist in der Figur 2 als in die Papierebene hinein und aus dieser heraus vorzusehen. Gut erkennbar ist die Verschieberichtung (Doppelpfeil 29) in der Figur 5. Die Verschiebung wird von einem Stellantrieb 30 vorgenommen, dem eine Steuereinrichtung 31 oder Regeleinrichtung 31 zugeordnet ist. Ferner sind der Figur 5 Heiz- und Kühlventile 32 entnehmbar, die einen Wasserkreislauf für den Wärmetauscher 18 entsprechend einer Vorgabe der Steuereinrichtung 31 oder Regeleinrichtung 31 steuern oder regeln. Oberhalb des Steuerschiebers 14 liegt eine Trennwand 33, die die Ausströmkammer 16 von der Mischkammer 17 lufttechnisch abtrennt.

Die der Mischkammer 17 zugeordneten Induktionsdüsen 13 gehören einer Induktionseinrichtung 34 an, die im Betrieb durch Induktionswirkung Luft durch den Wärmetauscher 18 ansaugt. Die der Ausströmkammer 16 zugeordneten Ausströmdüsen 13' müssen keine Induktionswirkung entfalten, sondern lediglich Luft in die Ausströmkammer 16 einbringen, sodass diese Ausströmdüsen 13' nicht unbedingt düsenförmig gestaltet sein müssen, sondern beispielsweise auch mit gleichbleibendem Durchströmungsquerschnitt. Sie sollen im Zuge dieser Anmeldung jedoch dennoch als Induktionsdüsen oder Ausströmdüsen bezeichnet werden.

Aus dem Vorstehenden wird deutlich, dass in Abhängigkeit von der Stellung des Steuerschiebers 14 bei entsprechender Anordnung und/oder Ausbildung der Steueröffnungen 28 und unter Berücksichtigung der Anordnung und Ausbildung der Induktionsdüsen 13 beziehungsweise Ausströmdüsen 13' eine entsprechende Volumenstromeinstellung vorgenommen werden kann, vorzugsweise derart, dass eine kontinuierliche Volumenstromeinstellung möglich ist und auch die der Mischkammer 17 zugeordneten Induktionsdüsen 13 und die der Ausströmkammer 16 zugeordneten Ausströmdüsen 13' hinsichtlich ihrer Volumenströme in Abhängigkeit von der gewünschten Betriebsart der lufttechnischen Vorrichtung 1 gesteuert beziehungsweise geregelt werden können. Hierauf wird nachstehend noch näher eingegangen.

An einer geeigneten Stelle des Raumes 2 ist mindestens ein Sensor 35 angeordnet, der mit der Steuereinrichtung 31 beziehungsweise Regeleinrichtung 31 zusammenwirkt. Der Sensor 35 ermittelt eine stoffliche und/oder thermische Raumlast im Raum 2. Die stoffliche Raumlast bezieht sich auf die Luftqualität, die thermische Raumlast auf die Lufttemperatur, insbesondere in der Aufenthaltszone 9. Um dem Primärluftanschluss 11 Primärluft zuzuführen, ist dieser entweder an ein Luftkanalnetz angeschlossen (nicht dargestellt), das von einer Klimazentrale des den Raum 2 aufweisenden Gebäudes versorgt wird, oder es ist im Bereich der Fassade 3 ein Fassadenlufteinlass für Außenluft vorgesehen und der Vorrichtung 1 oder der Fassade 3 eine Luftfördereinrichtung, insbesondere ein elektrischer Ventilator, zugeordnet, um Außenluft zu fördern und dem Luftverteilkasten 10 über den Primärluftanschluss 11 zuzuführen. Im ersten Fall (Luftzentrale) wird somit eine zentrale Vorrichtung 1 ausgebildet, also ein zentrales lufttechnisches Gerät. Im zweiten Fall (Fassadenlufteinlass) liegt eine dezentrale Vorrichtung 1 vor, also ein dezentrales lufttechnisches Gerät.

Es ergibt sich folgende Funktion: Dem Primärlufteinlass 11 wird Primärluft 36 mit vorzugsweise konstantem Druck, insbesondere mit 100 Pa, zugeführt. Bei der Primärluft 36 handelt es sich um Außenluft, insbesondere konditionierte Außenluft. Hierunter ist ein Heizen, Kühlen, Entfeuchten und/oder Befeuchten der Luft zu verstehen. Die Primärluft 36 tritt in einer aus der Figur 1 hervorgehenden ersten Betriebsart als erste Primärluft 36' aus den Induktionsdüsen 13 aus, die der Mischkammer 17 zugeordnet sind. Hierzu hat der Stellantrieb 30 - gesteuert von der Steuereinrichtung 31 oder geregelt von der Regeleinrichtung 31 und in Abhängigkeit der vom Sensor 35 erfassten Daten - den Steuerschieber 14 derart verschoben, dass die Induktionsdüsen 13 der Mischkammer 17 geöffnet und die Induktionsdüsen 13 (die im Zuge dieser Anmeldung auch als Ausströmdüsen 13' bezeichnet sind) der Ausströmkammer 16 geschlossen sind. Aufgrund der sich in der Mischkammer 17 einstellenden Induktionswirkung wird Raumluft 37 des Raumes 2 im Bereich des Fensters 6 angesaugt, sodass sich eine von oben nach unten entlang des Fensters 6 einstellende Luftströmung ergibt, die in den Lufteinlass 22 und von dort in den Zuströmfreiraum 19 eintritt, den Wärmetauscher 18 durchsetzt und sich - konditioniert durch den Wärmetauscher 18 (sofern dieser von der Steuereinrichtung 31 oder Regeleinrichtung 31 über die Heiz- und Kühlventile 32 betrieben wird - als erste Sekundärluft 37' in der Mischkammer 17 mit der von den Induktionsdüsen 13 kommenden ersten Primärluft 36' mischt und als Mischluft 38 aus dem ersten Luftauslass 21 in den Raum 2 eintritt. Die Strömungsrichtung der Mischluft 38 aus dem ersten Luftauslass 21 heraus ist nach oben gerichtet und der Strömungsimpuls derart ausgebildet, dass die Mischluft 38 ein Stück weit im Raum 2 aufsteigt, etwa bis auf die halbe oder dreiviertel Raumhöhe, jedenfalls nicht so weit, dass sich der Luftstrom der Mischluft 38 an eine Raumwandung, beispielsweise die Raumdecke, anlegt. Das Austreten der Mischluft 38 aus dem ersten Luftauslass 21 erfolgt vorzugsweise in Einzelstrahlen 39, wodurch sich eine besonders hohe Einmischung von Raumluft 37 (zweite Sekundärluft 37") in die Mischluft 38 ergibt und sich auf diese Art und Weise in dieser Raumzone eine Mischlüftung einstellt. Im Zuge des sich Entfernens der Mischluft 38 von der Vorrichtung 1 wird der Austrittsimpuls abgebaut, sodass die Mischluft 38, nunmehr mit eingemischter Raumluft, bogenförmig in Richtung auf den Fußboden 4 strömt und kurz vor Erreichen des Fußbodens 4, oberhalb von diesem, in eine Luftströmung übergeht, die sich von der Fassade 3 entfernt und parallel zum Fußboden 4 in die Aufenthaltszone 9 des Raumes 2 gelangt. Nach Abbau des erwähnten Ausströmimpulses geht auf diese Art und Weise die Mischlüftung in eine Quelllüftung über, sodass insgesamt eine Misch-Quelllüftung vorliegt, die eine erste Raumströmungsart bei der lufttechnischen Behandlung des Raumes 2 durch die Vorrichtung 1 bildet.

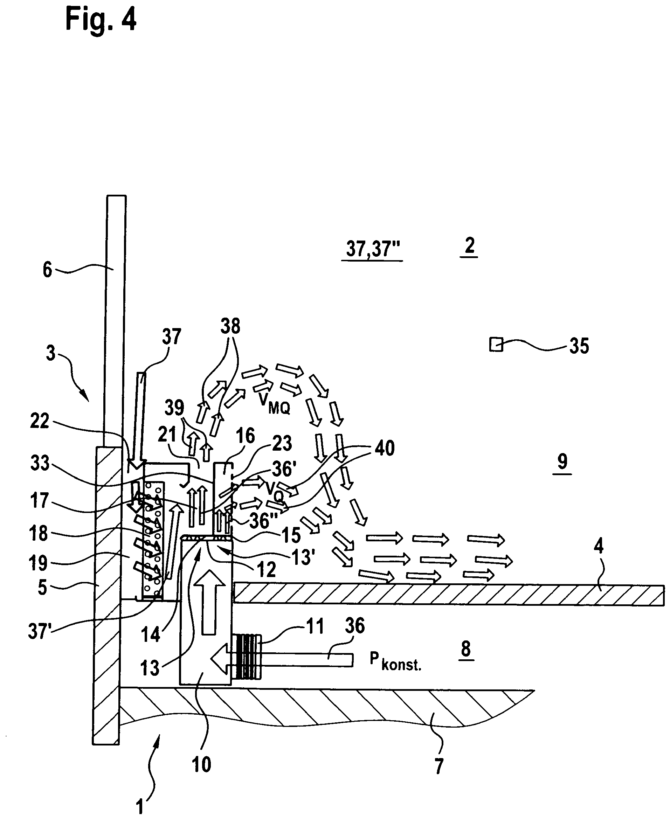

Wird nun - aufgrund der vom Sensor 35 sensierten Daten in Bezug auf die stoffliche und/oder thermische Raumlast des Raumes 2 eine Verlagerung des Steuerschiebers 14 vorgenommen, beispielsweise bei hoher stofflicher und/oder thermischer Raumlast, so ergibt sich die Situation gemäß Figur 4. Nach wie vor erfolgt eine Behandlung des Raumes 2 mit der ersten Raumströmungsart als Misch-Quelllüftung, so wie dies vorstehend bereits beschrieben wurde. Der Volumenstrom der Misch-Quelllüftung ist in der Figur 4 mit V_{MQ} gekennzeichnet. Durch die erwähnte Verlagerung des Steuerschiebers 14 tritt nunmehr jedoch auch Primärluft 36 als zweite Primärluft 36" aus den Induktionsdüsen 13 aus, die der Ausströmkammer 16 zugeordnet sind, also aus den Ausströmdüsen 13', wobei die zweite Primärluft 36" mit nur sehr geringem Impuls in die Ausströmkammer 16 strömt und etwa horizontal aus dem zweiten Luftauslass 23 austritt. Es handelt sich dabei um eine nur geringe Strömungsgeschwindigkeit aufweisende Quellluft 40, die insbesondere leicht bogenförmig strömt und sich mit der von oben herabströmenden Luftströmung der Misch-Quelllüftung vereinigt und zusammen mit dieser die Aufenthaltszone 9 des Raumes 2 erreicht. Die Quellluft 40 weist den Volumenstrom V_{Q} auf und bildet eine zweite Raumströmungsart, die eine Quelllüftung darstellt.

Aus alledem wird deutlich, dass in Abhängigkeit der Stellung des Steuerschiebers 14 die Möglichkeit besteht, beide Raumströmungsarten, die unterschiedlich voneinander sind, in den Raum 2 einzubringen, wobei es durch die Stellung des Steuerschiebers 14 auch möglich ist, die Volumenströme der beiden Raumströmungsarten insbesondere stufenlos zu beeinflussen. So ist es in Abhängigkeit der Schieberstellung möglich, den Volumenstrom der Luft der einen Raumströmungsart von 0 bis auf einen Maximalwert zu steigern und gleiches für den anderen Volumenstrom der anderen, zweiten Raumströmungsart vorzunehmen und auch beliebige Mischungsverhältnisse der Volumenströme der beiden Raumströmungsarten einzustellen. Dies alles erfolgt vorzugsweise vollautomatisch mittels des Sensors 35, der in entsprechender Art und Weise die Heiz- und Kühlventile 32 sowie die Steuereinrichtung oder Regeleinrichtung 31 und den Stellantrieb 30 ansteuert, sodass insgesamt ein Steuerkreis und/oder ein Regelkreis ausgebildet wird. Selbstverständlich ist es möglich, dass auch manuelle Eingriffe erfolgen können, was über eine entsprechende Eingabekonsole erfolgen kann. Vorzugsweise ist vorgesehen, dass in einer Normal-Betriebsart der Anteil des Volumenstroms der ersten Primärluft 36' am Volumenstrom der Gesamtluft 0 bis 40 % beträgt, wobei sich in dieser Normal-Betriebsart der Volumenstrom der Gesamtluft aus der Summe der maximalen Volumenströme der ersten Primärluft 36' und der zweiten Primärluft 36" zusammensetzt. Der Anteil des Volumenstroms der zweiten Primärluft 36" am Volumenstrom der Gesamtluft beträgt vorzugsweise 0 bis 60 %, wobei - je nach vom Sensor 35 erfasster stofflicher und/oder thermischer Raumlast - auch beliebige Zwischenwerte innerhalb der vorstehenden Spannen der Prozentwerte eingenommen werden können. In einer Stoßlüftungsart, die auch mit Heizen und/oder Kühlen verbunden sein kann, nämlich in einer sogenannten Schnell-Betriebsart, ist es möglich, dass mittels des Steuerschiebers 14 die Durchtrittsquerschnitte der Induktionsdüsen 13 derart weit aufgesteuert werden, dass der Volumenstrom der Gesamtluft 120 % beträgt, bezogen auf die vorstehend erwähnte Normalbetriebsart, die einen maximalen Volumenstrom der Gesamtluft von 100 % aufweist, wobei der Anteil des Volumenstroms der ersten Primärluft 36' maximal 60 % und der Anteil des Volumenstroms der zweiten Primärluft 36" maximal 60 % beträgt.

Aufgrund des erfindungsgemäßen Verfahrens beziehungsweise der erfindungsgemäßen Vorrichtung ist es möglich, bestimmte Luftarten in unterschiedlichen Raumströmungsarten in den Raum 2 einzubringen, wobei mittels der Volumenstromstelleinrichtung 15 die Volumenströme der beiden Primärluftströme 36', 36" in Abhängigkeit von der stofflichen und/oder der thermischen Raumlast des Raumes 2 gesteuert und/oder geregelt werden. Selbstverständlich ist die Erfindung nicht auf zwei Raumströmungsarten und auf das Einbringen von zwei Volumenströme der Primärluft beschränkt, sondern es können auch noch mehr Raumströmungsarten und Primärluftströme vorgesehen sein.

Ist der Raum unbenutzt, das heißt halten sich dort keine Personen auf, so gilt in dieser Betriebsart V_{MQ} = V_{Q} = 0, mithin haben die beiden Volumenströme von Mischluft 38 (Misch-Quelllüftung) und Quellluft 40 (Quelllüftung) den Wert 0. Die Werte von V_{MQ} und V_{Q} werden durch die Schiebestellung des Steuerschiebers 14 bestimmt.

Liegt eine Standardsituation vor, in der sich zum Beispiel zwei Personen im Raum 2 aufhalten und ein Lüften, Heizen und/oder Kühlen in Abhängigkeit von der thermischen Situation im Raum 2 vorgenommen wird, so beträgt in dieser Betriebsart der Anteil des ersten Primärluftvolumenstroms am gesamten Primärluftvolumenstrom 0 % bis 40 % und V_{Q} = 0. Mithin tritt Primärluft 36 in die Induktionseinrichtung 34 ein und induziert Sekundärluft 37 durch den Wärmetauscher 18, wodurch Mischluft 38 in Richtung auf die Decke des Raumes 2 austritt, wobei der zugehörige Luftauslass 21 die austretende Luft vorzugsweise auffächert (Einzelstrahlen). Durch den begrenzten und konstant gehaltenen Vordruck der Primärluft, vorzugsweise 100 Pa, wird im Raum eine Misch-Quell-Lüftung erzeugt, so wie es vorstehend beschrieben wurde.

In einem Betriebsfall, in dem sich zum Beispiel mehr als zwei Personen im Raum 2 aufhalten und die stoffliche und/oder thermische Raumlast hoch ist, wird vorzugsweise gelüftet und/oder gekühlt. Dabei hat in dieser Betriebsart der erste Primärluftvolumenstrom einen Anteil am gesamten Primärluftvolumenstrom von 40 % und der zweite Primärluftvolumenstrom einen Anteil am gesamten Primärluftvolumenstrom von 0 % bis 60 %. Zusätzlich zu der zuvor beschriebenen Misch-Quelllüftung tritt Primärluft aus dem zweiten Luftauslass 23 aus, wobei dies vorzugsweise etwa in horizontaler Richtung erfolgt, sodass diese Primärluft (zweite Primärluft 36") eine Richtung aufweist, die auf eine Wand des Raumes zeigt und deren Strömungsrichtung insoweit etwa parallel zum Fußboden 4 verläuft. Es wird also zusätzlich zu der vorstehend erwähnten Misch-Quelllüftung eine Quelllüftung erzeugt, wobei sich beide Lüftungsarten überlagern.

Auf die Schnell-Betriebsart, die eine Schnelllüftung, Schnellheizung oder eine Schnellkühlung mit sich bringt, wurde vorstehend bereits näher eingegangen. Hier beträgt der Anteil des ersten Primärluftvolumenstroms am gesamten Primärluftvolumenstrom maximal 60 % und der Anteil des zweiten Primärluftvolumenstroms am gesamten Primärluftvolumenstrom maximal 60 %. Ein Anteil am gesamten Primärluftvolumenstrom von größer als 100% kann beispielsweise durch das Öffnen einer oder mehrerer weiterer Induktionsdüsen erzielt werden, welche bei einem Anteil von 100% noch verschlossen sind.

Sämtliche vorstehend erwähnte Betriebsarten gehen fließend und stufenlos ineinander über und werden durch den Sensor 35 gesteuert oder geregelt. Selbstverständlich können auch mehrere Sensoren 35 im Raum 2 untergebracht sein, um lokale Bereiche zu sensieren. Auch eine manuelle Betriebsart oder eine automatische Betriebsart mit manuellem Eingriff ist möglich.

## Patentansprüche

1. Verfahren zum Belüften, Heizen und/oder Kühlen eines Raumes (2) eines Gebäudes oder dergleichen, mit betriebartsabhängiger Verwendung einer Volumenstromstelleinrichtung (15), einer Induktionseinrichtung (34) und/oder eines Wärmetauschers (18),
- wobei durch die Wirkung der Induktionseinrichtung (34) erste Sekundärluft (37') den Wärmetauscher (18) passiert und zusammen mit erster, der Induktionseinrichtung (34) zugeführter Primärluft (36') in einer ersten Raumströmungsart in den Raum (2) eingebracht wird,
- wobei zweite Primärluft (36") in einer von der ersten Raumströmungsart unterschiedlichen zweiten Raumströmungsart in den Raum (2) eingebracht wird,
- und wobei die Volumenstromstelleinrichtung (15) die Volumenströme der ersten und zweiten Primärluft (36',36") in Abhängigkeit von einer stofflichen und/oder einer thermischen Raumlast des Raumes (2) steuert und/oder regelt,
- **dadurch gekennzeichnet, dass** die erste Raumströmungsart eine Misch-Quelllüftung und die zweite Raumströmungsart eine Quelllüftung ist.

2. Verfahren nach Anspruch 1, **dadurch gekennzeichnet, dass** die Induktionseinrichtung (34) mindestens eine Induktionsdüse (13) für die erste Primärluft (36') aufweist.

3. Verfahren nach einem der vorhergehenden Ansprüche, **dadurch gekennzeichnet, dass** die Volumenstromstelleinrichtung (15) den Volumenstrom der ersten Primärluft (36') stromabseitig der Induktionsdüse (13) steuert und/oder regelt, insbesondere direkt am Austrittsende der Induktionsdüse (13) steuert und/oder regelt.

4. Verfahren nach einem der vorhergehenden Ansprüche, **dadurch gekennzeichnet, dass** die zweite Primärluft (36") vor dem Eindringen in den Raum (2) mindestens eine Ausströmdüse (13') passiert und dass die Volumenstromstelleinrichtung (15) den Volumenstrom der zweiten Primärluft (36") stromabseitig der Ausströmdüse (13') steuert und/oder regelt, insbesondere direkt am Austrittsende der Ausströmdüse (13') steuert und/oder regelt.

5. Verfahren nach einem der vorhergehenden Ansprüche, **dadurch gekennzeichnet, dass** die Volumenstromstelleinrichtung (15) mindestens einen, vorzugsweise nur einen oder zwei gegenläufige, insbesondere mit oder je mit mindestens einer Steueröffnung (28) versehenen/versehene Steuerschieber (14) aufweist, der/die mit dem Austrittsende der Induktionsdüse (13) und/oder dem Austrittsende der Ausströmdüse (13') zur Einstellung des Austrittsquerschnitts der Induktionsdüse (13) und/oder der Ausströmdüse (13') lufttechnisch zusammenwirkt/zusammenwirken.

6. Verfahren nach einem der vorhergehenden Ansprüche, **dadurch gekennzeichnet, dass** sich die Misch-Quelllüftung mit der Quelllüftung in einer Aufenthaltszone (9) des Raumes (2) vereinigt.

7. Verfahren nach einem der vorhergehenden Ansprüche, **dadurch gekennzeichnet, dass** die erste Sekundärluft (37') mit der ersten Primärluft (36') eine Mischluft (38) bildet, die insbesondere als Einzelstrahlen (39) in den Raum (2) eingebracht wird.

8. Verfahren nach einem der vorhergehenden Ansprüche, **dadurch gekennzeichnet, dass** die Mischluft (38) senkrecht nach oben oder schräg nach oben, insbesondere im Bereich einer Fassade (3) des Raumes (2) und/oder im Bereich eines Fensters (6) des Raumes (2) ausgeblasen wird.

9. Verfahren nach einem der vorhergehenden Ansprüche, **dadurch gekennzeichnet, dass** die Quellluft (40) der Quelllüftung horizontal oder etwa horizontal in den Raum (2) eingeblasen wird.

10. Verfahren nach einem der vorhergehenden Ansprüche, **dadurch gekennzeichnet, dass** der Anteil des Volumenstroms der ersten Primärluft (36') am Volumenstrom der Gesamtluft 0 bis 40 % beträgt, wobei sich in einer Normal-Betriebsart der Volumenstrom der Gesamtluft aus der Summe der maximalen Volumenströme der ersten Primärluft (36') und zweiten Primärluft (36") zusammensetzt, und/oder dass der Anteil des Volumenstroms der zweiten Primärluft (36") am Volumenstrom der Gesamtluft 0 bis 60 % beträgt, wobei sich in einer Normal-Betriebsart der Volumenstrom der Gesamtluft aus der Summe der maximalen Volumenströme der ersten Primärluft (36') und zweiten Primärluft (36") zusammensetzt.

11. Verfahren nach einem der vorhergehenden Ansprüche, **dadurch gekennzeichnet, dass** in einer Schnell-Betriebsart der maximale Volumenstrom der Gesamtluft 120 % beträgt bezogen auf die Normal-Betriebsart mit einem maximalen Volumenstrom der Gesamtluft von 100 %, wobei der Anteil des Volumenstroms der ersten Primärluft (36') maximal 60 % und der Anteil des Volumenstroms der zweiten Primärluft (36") maximal 60 % beträgt.

12. Verfahren nach einem der vorhergehenden Ansprüche, **dadurch gekennzeichnet, dass** als Primärluft (36) von einer Klimazentrale des Gebäudes kommende, aufbereitete Außenluft und/oder von einem Fassadenlufteinlass des Gebäudes kommende, mittels einer Luftfördereinrichtung, insbesondere einem elektrischen Ventilator, geförderte Außenluft verwendet wird.

13. Verfahren nach einem der vorhergehenden Ansprüche, **dadurch gekennzeichnet, dass** erste Sekundärluft (37') Raumluft (37), insbesondere im Bereich der Fassade (3) des Raumes (2), bevorzugt aus dem Bereich eines Fensters (6) des Raumes (2) angesaugte Raumluft (37), ist.

14. Lufttechnische Vorrichtung zum Belüften, Heizen und/oder Kühlen eines Raumes (2) eines Gebäudes oder dergleichen, insbesondere zur Durchführung des Verfahrens nach einem oder mehreren der vorhergehenden Ansprüche, mit einer Volumenstromstelleinrichtung (15), einer Induktionseinrichtung (34) und einem Wärmetauscher (18),
- wobei der Induktionseinrichtung (34) erste Primärluft (36') zuführbar ist und durch die Wirkung der Induktionseinrichtung (34) erste Sekundärluft (37') den Wärmetauscher (18) passiert und zusammen mit der ersten Primärluft (36') als Mischluft (38) in einer ersten Raumströmungsart von mindestens einem ersten Luftauslass (21) in den Raum (2) einbringbar ist,
- wobei zweite Primärluft (36") in einer zweiten Raumströmungsart von mindestens einem zweiten Luftauslass (23) in den Raum (2) einbringbar ist,
- und wobei die Volumenstromstelleinrichtung (15) die Volumenströme der ersten und zweiten Primärluft (36',36") in Abhängigkeit von der mittels mindestens eines Sensors (35) ermittelten stofflichen und/oder thermischen Raumlast des Raumes (2) steuert und/oder regelt,
- **dadurch gekennzeichnet, dass** die erste Raumströmungsart eine Misch-Quelllüftung ist und dass die zweite Raumströmungsart eine Quelllüftung ist.

15. Vorrichtung nach Anspruch 14, **gekennzeichnet durch** die Ausbildung als zentrales oder dezentrales Gerät, wobei insbesondere bei der Ausbildung der Vorrichtung als dezentrales Gerät eine Luftfördereinrichtung, insbesondere ein elektrischer Ventilator, vorgesehen ist, der über einen Fassadenlufteinlass des Gebäudes Außenluft als Primärluft ansaugt.

16. Vorrichtung nach einem der vorhergehenden Ansprüche, **dadurch gekennzeichnet, dass** die Induktionseinrichtung (34) mindestens eine Induktionsdüse (13) aufweist und dass mindestens eine Ausströmdüse (13') vorgesehen ist, die von der zweiten Primärluft (36") vor dem Eindringen in den Raum (2) durchströmt wird.

17. Vorrichtung nach einem der vorhergehenden Ansprüche, **dadurch gekennzeichnet, dass** die Volumenstromstelleinrichtung (15) mindestens einen, vorzugsweise nur einen oder zwei gegenläufige, insbesondere mit oder je mit mindestens einer Steueröffnung (28) versehenen/versehene Steuerschieber (14) aufweist, der/die mit dem Austrittsende der Induktionsdüse (13) und/oder dem Austrittsende der Ausströmdüse (13') zur Einstellung des Austrittsquerschnitts der Induktionsdüse (13) und/oder der Ausströmdüse (13') lufttechnisch zusammenwirkt/zusammenwirken.

18. Vorrichtung nach einem der vorhergehenden Ansprüche, **dadurch gekennzeichnet, dass** die Luft der Misch-Quelllüftung mittels des ersten Luftauslasses (21) nach oben oder schräg nach oben in den Raum (2) strömt und dass die Luft der Quelllüftung mittels des zweiten Luftauslasses (23) horizontal oder etwa horizontal in den Raum (2) strömt.

19. Raum eines Gebäudes oder dergleichen mit mindestens einer lufttechnischen Vorrichtung (1) nach einem oder mehreren der vorhergehenden Ansprüche.

## Claims

1. A method for ventilating, heating and/or cooling a room (2) of a building or the like, by respectively using a volume flow adjusting device (15), an induction device (34) and/or a heat exchanger (18), depending on a mode of operation used,
- whereby, in a first room flow mode, first secondary air (37') passes the heat exchanger (18) under the effect of the induction device (34) and is introduced, together with first primary air (36') fed to the induction device (34), into the room (2),
- whereby second primary air (36") is introduced into the room (2) in a second room flow mode different from the first room flow mode,
- and whereby the volume flow adjusting device (15) controls and/or regulates the volume flows of the first and second primary air (36', 36") as a function of a material and/or thermal room load of the room (2),
- **characterised in that** the first room flow mode is a mixing / displacement ventilation and the second room flow mode is a displacement ventilation.

2. The method according to claim 1, **characterised in that** the induction device (34) has at least one induction nozzle (13) for the first primary air (36').

3. The method according to any one of the preceding claims, **characterised in that** the volume flow adjusting device (15) controls and/or regulates the volume flow of the first primary air (36') downstream of the induction nozzle (13), in particular directly at the outlet end of the induction nozzle (13).

4. The method according to any one of the preceding claims, **characterised in that** the second primary air (36") passes at least one outflow nozzle (13') before entering the room (2), and **in that** the volume flow adjusting device (15) controls and/or regulates the volume flow of the second primary air (36") downstream of the outflow nozzle (13'), in particular directly at the outlet end of the outflow nozzle (13').

5. The method according to any one of the preceding claims, **characterised in that** the volume flow adjusting device (15) has at least one, preferably only one or two opposing slide valve(s) (14), in particular each provided with at least one control opening (28) and cooperating in terms of air flow with the outlet end of the induction nozzle (13) and/or the outlet end of the outflow nozzle (13') for adjusting the outlet cross-section of the induction nozzle (13) and/or of the outflow nozzle (13').

6. The method according to any one of the preceding claims, **characterised in that** the mixing / displacement ventilation merges with the displacement ventilation in a stay zone (9) of the room (2).

7. The method according to any one of the preceding claims, **characterised in that** the first secondary air (37') forms, together with the first primary air (36'), mixed air (38) that it is introduced into the room (2) in particular in the form of individual jets (39).

8. The method according to any one of the preceding claims, **characterised in that** the mixed air (38) is blown out perpendicularly upwards or diagonally upwards, in particular in a region of a facade (3) of the room (2) and/or in a region of a window (6) of the room (2).

9. The method according to any one of the preceding claims, **characterised in that** the displacement air (40) of the displacement ventilation is blown into the room (2) horizontally or approximately horizontally.

10. The method according to any one of the preceding claims, **characterised in that** the proportion of the volume flow of the first primary air (36') in the total volume flow of air is from 0 to 40 % of the volume flow, wherein, in a normal mode of operation, the total volume flow of air is comprised of the sum of the maximal volume flows of the first primary air (36') and the second primary air (36"), and/or that the proportion of the volume flow of the second primary air (36") in the total volume flow of air is from 0 to 60 %, wherein, in a normal mode of operation, the volume flow of the total air is comprised of the sum of the maximal volume flows of the first primary air (36') and the second primary air (36").

11. The method according to any one of the preceding claims, **characterised in that**, in a fast mode of operation, the maximal total volume flow of air is 120 % relative to the normal mode of operation with a maximal total volume flow of air of 100 %, wherein the proportion of the volume flow of the first primary air (36') is at most 60 % and the proportion of the volume flow of the second primary air (36") is at most 60 %.

12. The method according to any one of the preceding claims, **characterised in that** outside air treated by and coming from a HVAC central of the building and/or outside air coming from a facade air inlet of the building and conveyed by means of an air-conveying apparatus, in particular by an electrical ventilator, is used as the primary air (36).

13. The method according to any one of the preceding claims, **characterised in that** the first secondary air (37') is room air (37), in particular room air (37) aspirated in the region of the facade (3) of the room (2), preferably from the region of a window (6) of the room (2).

14. An air flow device for ventilating, heating and/or cooling a room (2) of a building or the like, in particular for executing the method according to any one or more of the preceding claims, with a volume flow adjusting device (15), an induction device (34) and a heat exchanger (18),
- whereby, in a first room flow mode, first primary air (36') is feedable to the induction device (34) and first secondary air (37') passes the heat exchanger (18) under the effect of the induction device (34) and is, together with the first primary air (36'), introducible as mixed air (38) into the room (2) by at least one first air outlet (21),
- whereby, in a second room flow mode, second primary air (36") introducible into the room (2) by at least one second air outlet (23),
- and whereby the volume flow adjusting device (15) controls and/or regulates the volume flows of the first and second primary air (36', 36") as a function of a material and/or thermal room load of the room (2) determined by at least one sensor (35),
- **characterised in that** the first room flow mode is a mixing / displacement ventilation and the second room flow mode is a displacement ventilation.

15. The device according to claim 14, **characterized by** being configured as a central or decentral apparatus, wherein, in particular in the case of being configured as a decentral apparatus, an air-conveying apparatus, in particular an electrical ventilator, is provided which aspirates outside air via a facade air inlet of the building as the primary air.

16. The device according to any one of the preceding claims, **characterised in that** the induction device (34) has at least one induction nozzle (13), and **in that** at least one outflow nozzle (13') is provided which is traversed by the second primary air (36") before it enters the room (2).

17. The device according to any one of the preceding claims, **characterised in that** the volume flow adjusting device (15) has at least one, preferably only one or two opposing slide valve(s) (14), in particular each provided with at least one control opening (28) and cooperating in terms of air flow with the outlet end of the induction nozzle (13) and/or the outlet end of the outflow nozzle (13') for adjusting the outlet cross-section of the induction nozzle (13) and/or of the outflow nozzle (13').

18. The device according to any one of the preceding claims, **characterised in that** the air of the mixing/displacement ventilation flows upwards or diagonally upwards into the room (2) by means of the first air outlet (21), and **in that** the air of the displacement ventilation flows horizontally or approximately horizontally into the room (2) by means of the first air inlet (23).

19. A room of a building or the like, with at least one air flow device (1) according to any one or more of the preceding claims.

## Revendications

1. Procédé de ventilation, de chauffage et/ou de refroidissement d'une pièce (2) d'un bâtiment ou similaire, en utilisant, en fonction du mode d'exploitation respectif, un dispositif de réglage de débit volumique (15), un appareil d'induction (34) et/ou un échangeur de chaleur (18),
- dans lequel, par l'effet de l'appareil d'induction (34), un premier flux d'air secondaire (37') passe à travers l'échangeur de chaleur (18) et, ensemble avec un premier flux d'air primaire (36') alimenté dans l'appareil d'induction (34), est introduit dans la pièce (2) dans un premier mode d'écoulement de pièce,
- dans lequel un second flux d'air primaire (36"), dans un second mode d'écoulement de pièce différent du premier mode d'écoulement de pièce, est introduit dans la pièce (2),
- et dans lequel le dispositif de réglage de débit volumique (15) commande et/ou règle les débits volumiques des premier et second flux d'air primaire (36', 36") en fonction d'une charge de pièce matérielle et/ou thermique de la pièce (2),
- **caractérisé en ce que** le premier mode d'écoulement d'air est une ventilation par mélange / déplacement, et le second mode d'écoulement d'air est une ventilation par déplacement.

2. Procédé selon la revendication 1, **caractérisé en ce que** l'appareil d'induction (34) présente au moins une buse d'induction (13) pour le premier flux d'air primaire (36').

3. Procédé selon l'une quelconque des revendications précédentes, **caractérisé en ce que** le dispositif de réglage de débit volumique (15) commande et/ou règle le débit volumique du premier flux d'air primaire (36') en aval de la buse d'induction (13), notamment directement au niveau de l'extrémité de sortie de la buse d'induction (13).

4. Procédé selon l'une quelconque des revendications précédentes, **caractérisé en ce que** le second flux d'air primaire (36"), avant qu'il entre dans la pièce (2), passe à travers d'au moins une buse de sortie (13'), et que le dispositif de réglage de débit volumique (15) commande et/ou règle le débit volumique du second flux d'air primaire (36") en aval de la buse de sortie (13'), notamment directement au niveau de l'extrémité de sortie de la buse de sortie (13').

5. Procédé selon l'une quelconque des revendications précédentes, **caractérisé en ce que** le dispositif de réglage de débit volumique (15) présente au moins une, de préférence une ou deux vanne(s) de commande (14), notamment prévue(s) respectivement d'au moins une ouverture de commande (28), la ou les vannes coopérant aérauliquement avec l'extrémité de sortie de la buse d'induction (13) et/ou avec l'extrémité de sortie de la buse de sortie (13') pour l'ajustage de la section de sortie de la buse d'induction (13) et/ou de la buse de sortie (13').

6. Procédé selon l'une quelconque des revendications précédentes, **caractérisé en ce que** la ventilation par mélange / déplacement s'unit à la ventilation par déplacement dans une zone de séjour (9) de la pièce (2).

7. Procédé selon l'une quelconque des revendications précédentes, **caractérisé en ce que** le premier flux d'air secondaire (37') forme, avec le premier flux d'air primaire (36'), un flux d'air mixte (38) qui est, notamment sous forme de jets individuels (39), introduit dans la pièce (2).

8. Procédé selon l'une quelconque des revendications précédentes, **caractérisé en ce que** le flux d'air mixte (38) est soufflé perpendiculairement vers le haut ou obliquement vers le haut, notamment dans la région d'une façade (3) de la pièce (2) et/ou dans la région d'une fenêtre (6) de la pièce (2).

9. Procédé selon l'une quelconque des revendications précédentes, **caractérisé en ce que** l'air de déplacement (40) de la ventilation par déplacement est soufflé dans la pièce (2) horizontalement ou à peu près horizontalement.

10. Procédé selon l'une quelconque des revendications précédentes, **caractérisé en ce que** la proportion du flux volumique du premier flux d'air primaire (36') dans le débit volumique du flux d'air total est de 0 à 40 %, le débit volumique du flux d'air total étant constitué, dans un mode d'exploitation normal, par la somme des débits volumiques maximaux du premier flux d'air primaire (36') et du second flux d'air primaire (36"), et/ou que la proportion du débit volumique du second flux d'air primaire (36") dans le débit volumique du flux d'air total est de 0 à 60 %, le débit volumique du flux d'air total étant constitué, dans un mode d'exploitation normal, par la somme des débits volumiques maximaux du premier flux d'air primaire (36') et du second flux d'air primaire (36").

11. Procédé selon l'une quelconque des revendications précédentes, **caractérisé en ce que**, dans un mode d'exploitation rapide, le débit volumique maximal du flux d'air total est 120 % par rapport au mode d'exploitation normal, avec un débit volumique maximal du flux d'air total de 100 %, la proportion du débit volumique du premier flux d'air primaire (36') étant au plus 60 %, et la proportion du débit volumique du second flux d'air primaire (36") étant au plus 60 %.

12. Procédé selon l'une quelconque des revendications précédentes, **caractérisé en ce qu'**on utilise, en tant que flux d'air primaire (36), de l'air extérieur traité dans et venant d'une centrale de climatisation du bâtiment et/ou de l'air extérieur venant d'une entrée d'air en façade du bâtiment et étant convoyé au moyen d'un dispositif de convoyage d'air, notamment d'un ventilateur électrique.

13. Procédé selon l'une quelconque des revendications précédentes, **caractérisé en ce que** le premier flux d'air secondaire (37') est de l'air de pièce (37), notamment de l'air de pièce (37) qui est extrait dans la région de la façade (3) de la pièce (2), de préférence de la région d'une fenêtre (6) de la pièce (2).

14. Dispositif aéraulique pour la ventilation, le chauffage et/ou le refroidissement d'une pièce (2) d'un bâtiment ou similaire, notamment pour effectuer le procédé selon l'une ou plusieurs des revendications précédentes, avec un dispositif de réglage de débit volumique (15), un appareil d'induction (34) et un échangeur de chaleur (18),
- dans lequel, dans un premier mode d'écoulement de pièce, un premier flux d'air primaire (36') peut être alimenté à l'appareil d'induction (34), et un premier flux d'air secondaire (37') passe, sous l'effet de l'appareil d'induction (34), à travers l'échangeur de chaleur (18) et, ensemble avec le premier flux d'air primaire (36'), peut être introduit dans la pièce (2) sous forme d'air mixte (38) au moyen d'au moins une première sortie d'air (21),
- dans lequel ; dans un second mode d'écoulement de pièce, un second flux d'air primaire (36") peut être introduit dans la pièce (2) au moyen d'au moins une seconde sortie d'air (23),
- et dans lequel le dispositif de réglage de débit volumique (15) commande et/ou règle les débits volumiques des premier et second flux d'air primaire (36', 36") en fonction de la charge de pièce matérielle et/ou thermique de la pièce (2) déterminée par au moins un capteur (35),
- **caractérisé en ce que** le premier type d'écoulement d'air est une ventilation par mélange / déplacement, et le second type d'écoulement d'air est une ventilation par déplacement.

15. Dispositif selon la revendication 14, **caractérisé en ce qu'**il est configuré en tant qu'appareil centralisé ou décentralisé, dans lequel, notamment dans le cas de la configuration du dispositif comme appareil décentralisé, un dispositif de convoyage d'air, notamment un ventilateur électrique, est prévu qui aspire, en tant que flux d'air primaire, de l'air extérieur d'une entrée d'air en façade du bâtiment.

16. Dispositif selon l'une quelconque des revendications précédentes, **caractérisé en ce que** l'appareil d'induction (34) présente au moins une buse d'induction (13), et que au moins une buse de sortie (13') est prévue à travers laquelle passe le second flux d'air primaire (36") avant qu'il entre dans la pièce (2).

17. Dispositif selon l'une quelconque des revendications précédentes, **caractérisé en ce que** le dispositif de réglage de débit volumique (15) présente au moins une, de préférence seulement une ou deux vanne(s) de commande (14) notamment prévue(s) respectivement d'au moins une ouverture de commande (28), la ou les vannes coopérant aérauliquement avec l'extrémité de sortie de la buse d'induction (13) et/ou avec l'extrémité de sortie de la buse de sortie (13') pour l'ajustage de la section de sortie de la buse d'induction (13) et/ou de la buse de sortie (13').

18. Dispositif selon l'une quelconque des revendications précédentes, **caractérisé en ce que** l'air de la ventilation par mélange / déplacement s'écoule dans la pièce (2) perpendiculairement vers le haut ou obliquement vers le haut au moyen de la première sortie d'air (21), et que l'air de la ventilation par déplacement s'écoule dans la pièce (2) horizontalement ou à peu près horizontalement au moyen de la seconde sortie d'air (23).

19. Pièce d'un bâtiment ou similaire avec au moins un dispositif aéraulique (1) selon l'une ou plusieurs des revendications précédentes.
